(19) Europäisches Patentamt
European Patent Office
Office européen des brevets

(11) **EP 0 714 162 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.⁶: **H02P 6/24**

(21) Anmeldenummer: **95203161.5**

(22) Anmeldetag: **17.11.1995**

(54) **Schaltungsanordnung zum Steuern eines elektronisch kommutierten Motors**

Circuit to control an electronically commutated motor

Circuit de commande d'une moteur commuté électroniquement

(84) Benannte Vertragsstaaten:
**DE FR GB IT**

(30) Priorität: **26.11.1994 DE 4442151**

(43) Veröffentlichungstag der Anmeldung:
**29.05.1996 Patentblatt 1996/22**

(73) Patentinhaber:
• **Philips Patentverwaltung GmbH**
  **22335 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB IT**

(72) Erfinder:
• **Bolte, Ekkehard, Dr., c/o Philips**
  **D-22335 Hamburg (DE)**

• **Halfmann, Jürgen, c/o Philips**
  **D-22335 Hamburg (DE)**

(74) Vertreter: **Peters, Carl Heinrich, Dipl.-Ing. et al**
**Philips Patentverwaltung GmbH,**
**Röntgenstrasse 24**
**22335 Hamburg (DE)**

(56) Entgegenhaltungen:
**US-A- 4 271 385**        **US-A- 5 220 257**

• **PATENT ABSTRACTS OF JAPAN vol. 9 no. 31 (E-295) [1754] ,9. Februar 1985 & JP-A-59 175389 (HITACHI SEISAKUSHO K. K.) 4. Oktober 1984,**
• **PATENT ABSTRACTS OF JAPAN vol. 16 no. 263 (E-1216) ,15. Juni 1992 & JP-A-04 058779 (OKADA TADASHI) 25. Februar 1992,**

**Beschreibung**

Die Erfindung bezieht sich auf eine Schaltungsanordnung zum Steuern eines elektronisch kommutierten Motors mit einem beweglichen Abtriebselement und wenigstens einem Wicklungsstrang, der aus einer Gleichspannungsquelle mit einer vorgebbaren Strangspannung und einem vorgebbaren Polradwinkel speisbar ist, mit einer Einrichtung zur Bestimmung der Lage und/oder Bewegungsgeschwindigkeit des beweglichen Abtriebselements (im folgenden: Bewegungssensor), mit Stromzuführelementen zum gesteuerten Verbinden der Wicklungsstränge mit der Gleichspannungsquelle und mit einer Steuerschaltung zum Steuern der Stromzuführelemente derart, daß sich die vorgegebene(n) Strangspannung(en) und Polradwinkel einstellen, wobei die Stromzuführelemente zum Verzögern des Abtriebselements derart von der Steuerschaltung steuerbar sind, daß eine der Bewegungsrichtung des Abtriebselements entgegengesetzte Kraft auf dieses aufgebracht wird.

Aus der US-PS 4,271,385 ist ein Steuersystem für einen kommutatorlosen Motor bekannt, in dem ein Synchronmotor mit einer mehrphasigen Ankerwicklung und einer Feldwicklung durch einen Frequenzumsetzer betrieben wird. Ein mit der Umlaufposition des Synchronmotors verknüpftes Lagesignal ist dazu angepaßt, in der Phase um maximal 180° in voreilender und nacheilender Richtung durch ein Lagesteuersignal verschoben zu werden, so daß ein Zündimpuls für den Frequenzumsetzer durch eine Kombination eines phasenverschobenen Lagesignals und eines Umkehrsignals erzeugt wird. Auf diese Weise werden die Betriebsarten stabil zwischen einer Motorbetriebsart und einer Nutzbremsung und zwischen Vorwärts- und Rückwärtsbetrieb durch Verändern des Betrages des Phasensteuersignals und durch Umkehr von dessen Polarität umgeschaltet.

Aus der US-PS 5,220,257 ist eine Motorsteuerschaltung bekannt, in der der Motor gemäß einem Drehmoment-Steuersignal durch einen Antriebsstrom angetrieben wird und in der die Drehung des Motors durch Erzeugung eines Drehmoments in Gegenrichtung angehalten wird, wenn ein Haltesignal zum Anhalten des Motors empfangen wird. Weiterhin ist diese Motorsteuerschaltung mit einem Pegelumkehrschaltkreis ausgestattet, der zwischen einem Drehmoment-Steuersignal-Erzeugungsschaltkreis und einer Treiberschaltung angeordnet ist zum Umkehren des Pegels des Drehmoment-Steuersignals, was einen vorbestimmten Referenzpegel betrifft. Ein in seinem Pegel umgekehrtes Drehmoment-Steuersignal wird vom Pegelumkehrschaltkreis an die Treiberschaltung ausgegeben, wenn das Haltesignal empfangen wird. Die Motorsteuerschaltung ist ferner mit einer Referenzsignalerzeugungsschaltung ausgestattet, die ein Referenzsignal erzeugt, welches einer Referenzdrehgeschwindigkeit des Motors entspricht, und die außerdem ein weiteres Referenzsignal erzeugt, welches einer Drehgeschwindigkeit entspricht, die geringer ist als die Referenzdrehgeschwindigkeit, wenn das Haltesignal empfangen wird.

Elektronisch kommutierte Motoren werden in neuerer Zeit für vielfältige Anwendungen in elektrisch betriebenen Kleingeräten vorgesehen. Für zahlreiche derartige Anwendungen, insbesondere für Elektrogeräte im Haushalt, im Kraftfahrzeug, in der Automatisierung, für Werkzeugmaschinen und dergleichen, ist es wichtig, bei Außerbetriebnahme eines solchen Gerätes möglichst rasch den Stillstand zu erreichen, was aus Gründen der Sicherheit, der Zeitersparnis oder der Präzision bei der Arbeit mit derartigen Geräten gewünscht oder gefordert wird.

Für ein derartiges Stillsetzen innerhalb eines sehr kurzen Zeitintervalls (kurze Stillsetzzeit) ist die Dissipation der Bewegungsenergie des Motors durch mechanische Reibung im Gerät allein nicht ausreichend, da oft die Bewegungsenergie des Motors zu hoch ist. Zusätzliche mechanische Bremsen, beispielsweise elektromagnetisch betätigt, sind sehr aufwendig und reparaturanfällig, da sie einem starken Verschleiß unterworfen sind. Eine Nutzbremsung, bei der die mechanische Bewegungsenergie des Motors in elektrische Energie zurückgeformt wird, bedingt, daß die zurückgewonnene elektrische Energie in die Energiequelle zurückgespeist oder über zusätzliche Dissipationswiderstände in Wärmeenergie umgewandelt wird. Eine Rückspeisung in die Energiequelle ist jedoch in vielen Fällen nicht möglich oder nicht zulässig, und Dissipartionswiderstände bilden einen zusätzlichen, hohen konstruktiven und schaltungstechnischen Aufwand.

Eine andere Bremsart besteht darin, die Wicklungsstränge des Motors kurzzuschließen. Dann entwickeln die induzierten Strangströme zusammen mit dem Erregerfeld ein Bremsmoment. Bei hohen Drehzahlen strebt der induzierte Strangstrom jedoch einem Grenzwert zu, was eine natürliche Strombegrenzung bedeutet. Wegen der durch das Konstruktionsprinzip bedingten, ungünstigen räumlichen Zuordnung von Strom und Magnetfeld wird jedoch gerade für hohe Bewegungsgeschwindigkeiten (Drehzahlen) des Motors nur ein geringes Bremsmoment erhalten. Mit fallender Drehzahl erreicht dieses Bremsmoment ein Maximum und wird mit weiter fallender Drehzahl zu Null. Die Amplitude und der Verlauf des Bremsmomentes über der Drehzahl sind durch die Dimensionierung des Motors und seiner Stromzuführelemente, z.B. eines Wechselrichters festgelegt und nur stark eingeschränkt, bei Permanenterregung überhaupt nicht beeinflußbar. Die damit erzielbare Stillsetzzeit des Motors reicht für viele Anwendungsfälle nicht aus.

Aus der eingangs genannten US-PS 5,220,257 ist es bekannt, die Drehung des Motors durch Erzeugen eines Drehmoments in der Motorbewegung entgegengesetzter Richtung abzubremsen. Dazu wird im Bremsfall der Pegel eines Drehmoment-Steuersignals im Hinblick auf einen vorgegebenen Referenzpegel invertiert. Es zeigt sich jedoch, daß auch mit dieser Methode noch keine optimalen Stillsetzzeiten zu erzielen sind. Die Erfindung hat die Aufgabe, eine Schaltungsanordnung der eingangs genannten Art so auszubilden, daß mit geringem konstruktivem Aufwand eine kürzestmögliche Stillsetzzeit erreicht werden kann.

Diese Aufgabe wird erfindungsgemäß dadurch gelöst, daß zum Verzögern des Abtriebselements Strangspannung(en) und/oder Polradwinkel in Abhängigkeit von der Bewegungsgeschwindigkeit derart steuerbar sind, daß

- in einem Bereich hoher Bewegungsgeschwindigkeit des Abtriebselements, der zu niedrigen Bewegungsgeschwindigkeiten hin durch das Erreichen einer höchstzulässigen Verzögerungskraft begrenzt ist, im Motor eine wenigstens weitgehend geschwindigkeitsunabhängige elektrische Leistung gemäß einem höchstzulässigen Strangstrom auftritt,
- in einem sich zu niedrigen Bewegungsgeschwindigkeiten hin an den Bereich hoher Bewegungsgeschwindigkeit anschließenden Bereich mittlerer Bewegungsgeschwindigkeit, der bis zu einer Bewegungsgeschwindigkeit reicht, bei der eine durch unmittelbares Kurzschließen der Wicklungsstränge erzeugbare Verzögerungskraft im wesentlichen ein Maximum erreichen würde, im Motor die höchstzulässige Verzögerungskraft auftritt, und
- in einem Bereich niedriger Bewegungsgeschwindigkeit, der sich zwischen dem Stillstand und dem Bereich mittlerer Bewegungsgeschwindigkeit erstreckt, die Verzögerungskraft zum Stillstand hin von ihrem höchstzulässigen Wert auf Null absinkt,

oder daß die Verzögerungskraft in den Bereichen hoher und mittlerer Bewegungsgeschwindigkeit auf Werte im Bereich zwischen den durch die vorstehenden Bedingungen bestimmten Werten und Null und im Bereich niedriger Bewegungsgeschwindigkeit auf Werte zwischen der höchstzulässigen Verzögerungskraft und Null einstellbar ist.

Die Erfindung macht sich die Erkenntnis zu eigen, daß mit den bekannten Anordnungen und Verfahren bei Verzicht auf zusätzliche Dissipationselemente noch keinesfalls die maximal erreichbaren bzw. höchstzulässigen Verzögerungskräfte erzeugt werden, daß diese jedoch über verhältnismäßig einfache physikalische Zusammenhänge gewonnen und genutzt werden können. Die Aufteilung in im wesentlichen drei Bereiche der Bewegungsgeschwindigkeit des Abtriebselements des Motors beruht dabei auf der Erkenntnis, daß bei hohen Bewegungsgeschwindigkeiten die stärkste Beanspruchung der Bauteile des Antriebs durch die Strangströme entsteht. Diese müssen auf ein Maß begrenzt werden, bei welchem weder eine Entmagnetisierung des Motors noch ein Schaden an den Stromzuführelementen auftritt. Entsprechend bestimmt sich der höchstzulässige Strangstrom im Bereich hoher Bewegungsgeschwindigkeit.

Ab einer zweiten Grenzgeschwindigkeit schließt sich an den Bereich hoher Bewegungsgeschwindigkeit zu niedrigen Bewegungsgeschwindigkeiten hin der Bereich mittlerer Bewegungsgeschwindigkeit an, in welchem durch den höchstzulässigen Strangstrom Verzögerungskräfte erzeugt werden können, die zu mechanischen Schäden an Motor und Antrieb führen können. Auch kann die Standfestigkeit des abgebremsten Gerätes beeinträchtigt werden. Daher wird im Bereich mittlerer Bewegungsgeschwindigkeit eine Steuerung auf diese höchstzulässige Verzögerungskraft vorgenommen.

Zwischen einer ersten Grenzgeschwindigkeit und dem Stillstand schließt sich an den Bereich mittlerer Bewegungsgeschwindigkeiten der Bereich niedriger Bewegungsgeschwindigkeit an. Dabei wird die erste Grenzgeschwindigkeit vorteilhaft derart gewählt, daß sie einer Bewegungsgeschwindigkeit entspricht, bei der beim unmittelbaren Kurzschließen der Wicklungsstränge im Motor eine maximale Verzögerungskraft auftreten würde. Allerdings kann die erste Grenzgeschwindigkeit auch einen anderen Wert annehmen. Im Bereich niedriger Bewegungsgeschwindigkeit, der durch geeignete Wahl der ersten Grenzgeschwindigkeit entsprechend den Bedürfnissen des jeweils zu realisierenden Antriebs dimensioniert werden kann, fällt die Verzögerungskraft vorteilhaft zum Stillstand hin auf Null ab. Dadurch wird ein Stillsetzen des Motors erreicht, welches auch im unmittelbaren Bereich des Stillstands frei von starken Kräfteschwankungen, also wenigstens weitgehend ruckfrei verläuft. Darüber hinaus wird so auch eine Bewegungsumkehr des Motors in der Betriebsart des Verzögerns vermieden.

Die Erfindung hat den Vorteil, daß kürzestmögliche Stillsetzzeiten ohne zusätzliche aufwendige Bauteile erreichbar sind. Es werden lediglich die vorhandenen Elemente genutzt, insbesondere werden keine zusätzlichen (elektronischen) Leistungsbauteile oder Dissipationselemente benötigt, und die Erfindung nutzt die ohnehin vorhandene Steuerschaltung zum Steuern der Stromzuführelemente. Dabei werden in der Betriebsart des Verzögerns gemäß der Erfindung die Strangspannung(en) und/oder der Polradwinkel von der Steuerschaltung durch entsprechendes, vom Bewegungssensor gesteuertes Betätigen der Stromzuführelemente eingestellt.

Die Erfindung ermöglicht es ferner, in einfacher Weise nach Bedarf auch gemäß anderer funktionaler Zusammenhänge zwischen der Verzögerungskraft bzw. dem Strangstrom und der Bewegungsgeschwindigkeit das Stillsetzen des Motors durchzuführen. Die Erfindung ist daher auch über den Zweck des Erreichens möglichst kurzer Stillsetzzeiten hinaus universell einsetzbar bzw. kann in der Weise zum Einsatz kommen, daß eine geforderte höchstzulässige Stillsetzzeit mit möglichst geringem Strangstrom bzw. möglichst geringer Verzögerungskraft erreicht wird, wodurch die Belastungen des Motors sowie der Schaltungsanordnung zu seiner Kommutation möglichst gering gehalten werden können.

In einer vorteilhaften Weiterbildung der Erfindung umfaßt die Steuerschaltung

- eine Kommutierungsstufe, von der das Steuern der Stromzuführelemente nach Maßgabe vorgegebener Sollsignale für die Amplitude(n) der Strangspannung(en) und für den Polradwinkel sowie eines zumindest die augenblickliche Lage des Abtriebselements darstellenden Lagesignals ausgeführt wird,
- eine Strangspannungsbestimmungsstufe, der das Lagesignal und/oder für den Fall, daß das Lagesignal dies nicht enthält, ein die Bewegungsgeschwindigkeit des Abtriebselements darstellendes Bewegungssignal zuführbar ist und von der daraus das von der Bewegungsgeschwindigkeit abhängige Soll signal der Amplitude(n) der Strangspannung (en) für das Verzögern des Abtriebselements bestimmbar und abgebbar ist,
- eine Polradwinkelbestimmungsstufe, der das Lagesignal und/oder für den Fall, daß das Lagesignal dies nicht enthält, das Bewegungssignal zuführbar ist und von der daraus das von der Bewegungsgeschwindigkeit abhängige Soll signal des Polradwinkels für das Verzögern des Abtriebselements bestimmbar und abgebbar ist,
- eine Verzögerungsaktivierungsstufe, die durch ein Betriebsarten-Steuersignal zwischen einer Betriebsart für Motorbetrieb und einer für das Verzögern umsteuerbar ist und durch die für das Verzögern die Strangspannungsbestimmungsstufe und die Polradwinkelbestimmungsstufe aktiv schaltbar sind, und
- eine Sollsignal-Umschaltstufe, die von der Verzögerungs-Aktivierungsstufe umsteuerbar ist und durch die in der Betriebsart des Verzögerns die Sollsignale der Amplitude(n) der Strangspannung(en) bzw. des Polradwinkels von der Strangspannungsbestimmungsstufe bzw. der Polradwinkelbestimmungsstufe oder wahlweise in der Betriebsart des Motorbetriebs entsprechende, vorgegebene Sollsignale der Kommutierungsstufe zuführbar sind.

Bei dieser Ausgestaltung der Erfindung wird vorteilhaft nicht unmittelbar in die Kommutierung des Motors eingegriffen. Vielmehr werden lediglich entsprechend der gewünschten Betriebsart benötigte Sollsignale für die Amplitude(n) der Strangspannung(en) und für den Polradwinkel bereitgestellt, und zwar in Abhängigkeit von der Bewegungsgeschwindigkeit des Abtriebselements des Motors. Dabei kann die Bewegungsgeschwindigkeit in einfacher Weise vom Bewegungssensor gewonnen werden. Durch die Erfindung wird somit einer bereits für den Motorbetrieb eingerichteten Steuerschaltung nur eine Einrichtung zur Lieferung von für die Betriebsart des Verzögerns benötigten Sollsignalen hinzugefügt. In der Steuerschaltung können dann je nach gewählter Betriebsart die Sollsignale für den Motorbetrieb oder die Sollsignale für das Verzögern zur Kommutierung herangezogen werden. Die der Steuerschaltung erfindungsgemäß hinzuzufügenden Stufen sind mit dieser sehr einfach und kompakt zusammenfaßbar.

Eine vorteilhafte Weiterbildung der Erfindung wird dadurch erhalten, daß das Sollsignal für die Strangspannung(en) U in der Strangspannungsbestimmungsstufe für den Bereich hoher Bewegungsgeschwindigkeiten gemäß der Beziehung

$$U = \omega \cdot L \cdot Imax - \sqrt{\omega^2 \cdot \psi^2 - (R \cdot Imax)^2},$$

für den Bereich mittlerer Bewegungsgeschwindigkeiten gemäß der Beziehung

$$U = \omega \cdot L \cdot Imax \cdot \sqrt{\omega/\omega_0} - \sqrt{\omega^2 \cdot \psi^2 - (R \cdot Imax)^2 \cdot \omega/\omega_0}$$

und für den Bereich niedriger Bewegungsgeschwindigkeit gemäß der Beziehung

$$U = \omega^2 \cdot L \cdot \psi / R$$

bestimmt wird, wobei

$\omega$ die elektrische Kreisfrequenz des Motors,
L die Stranginduktivität,
Imax der höchstzulässige Strangstrom,
$\psi$ die Flußverkettung eines Motorstrangs mit einem Erregerfeld des Motors,
R der ohmsche Strangwiderstand und
$\omega_0$ die elektrische Kreisfrequenz $\omega$ des Motors an der Grenze zwischen den Bereichen mittlerer und hoher Bewegungsgeschwindigkeiten ist.

Dabei bestimmt sich der höchstzulässige Strangstrom Imax aus dem kleineren der Werte für die zulässigen Ströme durch die Stromzufuhrelemente bzw. für die höchstzulässigen Strangströme, bei denen eine Entmagnetisierung des Motors gerade noch nicht auftritt. Vorzugsweise kann, wenn möglich, durch Dimensionierung des Motors und der Stromzuführelemente eine Übereinstimmung dieser Werte erzielt werden.

Die elektrische Kreisfrequenz $\omega_o$ wird bei der zweiten Grenzgeschwindigkeit erreicht.

Werden in den vorstehenden Beziehungen für die Strangspannung(en) U die Parameter des im speziellen Anwendungsfall zu steuernden Motors fest vorgegeben, entstehen sehr einfache funktionale Zusammenhänge zwischen der unmittelbar mit der Bewegungsgeschwindigkeit des Motors zusammenhängenden elektrischen Kreisfrequenz $\omega$ des Motors und der Strangspannung bzw. den Strangspannungen U, die in der Strangspannungsbestimmungsstufe in sehr einfacher Weise umgesetzt werden können. Damit ist für diese Strangspannungsbestimmungsstufe ein sehr einfacher Aufbau möglich.

Nach einer anderen Fortbildung der Erfindung umfaßt die Strangspannungsbestimmungsstufe eine erste Speichervorrichtung, aus der zu jedem aus den zuführbaren Werten des Lage- und/oder des Bewegungssignals bestimmbaren Wert der Bewegungsgeschwindigkeit je ein Wert des Sollsignals für die Strangspannung(en) abrufbar ist. Dabei können die Werte des Sollsignals für die Strangspannung(en) bevorzugt aus den vorstehend genannten Beziehungen ermittelt sein und von der ersten Speichervorrichtung in der Art einer Tabelle abgespeichert sein. Dadurch wird eine sehr schnelle Verfügbarkeit des Sollsignals bei einfachem Schaltungsaufbau erhalten.

In einer Weiterbildung der Erfindung kann die die erste Speichervorrichtung umfassende Strangspannungsbestimmungsstufe derart ausgebildet sein, daß der gesamte Bereich der aus den zuführbaren Werten des Lage- und/oder des Bewegungssignals bestimmbaren Werte der Bewegungsgeschwindigkeit in Intervalle unterteilt ist, daß aus der ersten Speichervorrichtung zu jedem Intervall ein allen Bewegungsgeschwindigkeitswerten eines Intervalls gemeinsamer Wert des Sollsignals für die Strangspannung(en) abrufbar ist und daß die Strangspannungsbestimmungsstufe weiterhin eine erste Interpolationsanordnung umfaßt zum Erzeugen interpolierter Werte des Sollsignals der Amplitude(n) der Strangspannung(en). Durch diese Maßnahme kann der Umfang der ersten Speichervorrichtung deutlich verringert werden. Dabei ist allen Werten der Bewegungsgeschwindigkeit innerhalb eines Intervalles ein einziger, gemeinsamer Wert des Sollsignals für die Strangspannung(en) zugeordnet. Entsprechend ist allen Werten der Bewegungsgeschwindigkeit der übrigen Intervalle je ein Wert des Sollsignals zugeordnet. Zum Abrufen des Sollsignals für einen bestimmten Wert der Bewegungsgeschwindigkeit wird dann zwischen dem zugeordneten, gemeinsamen Wert des Sollsignals für das Intervall, in dem der aktuelle Wert der Bewegungsgeschwindigkeit liegt, und den den benachbarten Intervallen zugeordneten Werten des Sollsignals je nach Lage des aktuellen Wertes der Bewegungsgeschwindigkeit innerhalb des ihm zugeordneten Intervalles interpoliert. In einer Abwandlung dieser Art der Ermittlung des Sollsignals kann auch bestimmten Werten der Bewegungsgeschwindigkeit je ein der zu realisierenden Beziehung entsprechender Wert des Sollsignals zugeordnet sein. Für den aktuell ermittelten Wert der Bewegungsgeschwindigkeit des Motors wird dann die Lage zu den benachbarten bestimmten Werten der Bewegungsgeschwindigkeit ermittelt und daraus zwischen den zugeordneten Werten des Sollsignals entsprechend der Lage des aktuellen Wertes der Bewegungsgeschwindigkeit interpoliert.

Eine andere Fortbildung der Erfindung ist dadurch gekennzeichnet, daß das Sollsignal für den Polradwinkel $\delta$ in der Polradwinkelbestimmungsstufe für den Bereich hoher Bewegungsgeschwindigkeiten gemäß der Beziehung

$$\delta = 180° - \arcsin \frac{R \cdot Imax}{\omega \cdot \psi},$$

für den Bereich mittlerer Bewegungsgeschwindigkeiten gemäß der Beziehung

$$\delta = 180° - \arcsin \frac{R \cdot Imax}{\sqrt{\omega \cdot \omega_0} \cdot \psi}$$

und für den Bereich niedriger Bewegungsgeschwindigkeit gemäß der Beziehung

$$\delta = 90°$$

bestimmt wird.

Das Soll signal für den Polradwinkel $\delta$ bestimmt sich somit in einfacher Weise aus denselben Parametern und Signalen wie das Sollsignal für die Strangspannung(en) U. Somit ist für die Polradwinkelbestimmungsstufe ein ähnlich einfacher Aufbau wie für die Strangspannungsbestimmungsstufe möglich.

Vorteilhaft kann in der Strangspannungs- und/oder der Polradwinkelbestimmungsstufe anhand vorgegebener Grenzwerte für das Lage- und/oder Bewegungssignal aus diesem bestimmt werden, in welchem der Bereiche sich der aktuelle Wert der Bewegungsgeschwindigkeit befindet. Als Grenzwerte werden hier die erste und die zweite Grenzgeschwindigkeit an den Übergängen zwischen den Bereichen niedriger und mittlerer bzw. mittlerer und hoher Bewegungsgeschwindigkeit herangezogen. Anhand der Zuordnung des aktuellen Wertes der Bewegungsgeschwindigkeit zu einem dieser Bereiche steht der Strangspannungs- und/oder der Polradwinkelbestimmungsstufe eine Steuergröße darüber zur Verfügung gemäß welcher der in Frage kommenden Beziehungen die Sollsignale aus der Bewegungsgeschwindigkeit zu ermitteln sind. Demzufolge kann die Bestimmung des Bereiches dann unterbleiben, wenn die Strangspannungsbestimmungsstufe mit der ersten Speicheranordnung ausgebildet ist.

In einer Abwandlung der Erfindung umfaßt die Polradwinkelbestimmungsstufe eine zweite Speichervorrichtung, aus der zu jedem aus den zuführbaren Werten des Lage- und/oder des Bewegungssignals bestimmbaren Wert der Bewegungsgeschwindigkeit je ein Wert des Sollsignals für die Polradwinkel abrufbar ist. Dies kann vorzugsweise dadurch verwirklicht sein, daß der gesamte Bereich der aus den zuführbaren Werten des Lage- und/oder des Bewegungssignals bestimmbaren Werte der Bewegungsgeschwindigkeit in Intervalle unterteilt ist, daß aus der zweiten Speichervorrichtung zu jedem Intervall ein allen Bewegungsgeschwindigkeitswerten eines Intervalles gemeinsamer Wert des Sollsignals für den Polradwinkel abrufbar ist und daß die Polradwinkelbestimmungsstufe weiterhin eine zweite Interpolationsanordnung umfaßt zum Erzeugen interpolierter Werte des Sollsignals für den Polradwinkel.

Für diese Ausgestaltungen der Polradwinkelbestimmungsstufe gilt das für die entsprechenden Ausgestaltungen der Strangspannungsbestimmungsstufe Gesagte in analoger Weise. Insbesondere kann dabei auch die beschriebene Bestimmung des Bereiches, in dem sich der aktuelle Wert der Bewegungsgeschwindigkeit befindet, durch die Polradwinkelbestimmungsstufe entfallen.

Um auch beim Einleiten der Betriebsart des Verzögerns das Auftreten unzulässig hoher Strangströme und/oder Verzögerungskräfte zu vermeiden, die als transiente Größen zu Beschädigungen des Motors oder der ihn kommutierenden Schaltungsanordnung führen können, ist nach einer anderen Fortbildung der Erfindung vorgesehen, daß beim Übergang in die Betriebsart des Verzögerns des Abtriebselements die Werte der Sollsignale der Amplitude(n) der Strangspannung(en) und/oder des Polradwinkels ausgehend von ihren aktuellen Werten für die vor dem Übergang vorhandene Betriebsart mit nicht mehr als einer höchstzulässigen Änderungsgeschwindigkeit in die für die Betriebsart des Verzögerns vorzugebenden Werte überführt werden, wobei die höchstzulässige Änderungsgeschwindigkeit derart bemessen ist, daß durch die Änderung der Werte der Sollsignale auftretende Transienten des Strangstromes auf den höchstzulässigen Strangstrom begrenzt werden.

Ähnlich wie beim Erreichen des Stillstands wird so auch beim Einleiten der Betriebsart des Verzögerns, insbesondere aus der Betriebsart des Motorbetriebes heraus, wenn dieser mit hoher Antriebsleistung eingestellt war, eine von gefährlichen Ruckbewegungen oder Stromspitzen freie Überleitung in die Betriebsart des Verzögerns erreicht. Dadurch werden die mechanischen und elektrischen Bauteile gegen Beschädigung geschützt.

In einer bevorzugten Ausführungsform können dabei die Werte der Sollsignale in vorgegebenen zeitlichen Schritten verändert werden, die bestimmte Höchstwerte nicht überschreiten dürfen. Dazu kann in einem vorgegebenen Zeittakt eine feste oder variable Änderung der Sollwerte um je eine Differenz, die einen höchstzulässigen Wert nicht überschreiten darf, vorgenommen werden, oder es kann eine kontinuierliche Änderung der Sollsignale erfolgen, deren zeitliche Ableitung einen vorbestimmten Wert nicht überschreiten darf.

Ein Ausführungsbeispiel der Erfindung ist in der Zeichnung dargestellt und wird im nachfolgenden näher beschrieben. Es zeigen:

Fig. 1 die blockschematische Darstellung einer Schaltungsanordnung gemäß der Erfindung,
Fig. 2 ein Diagramm der Verzögerungskraft, aufgetragen über der Bewegungsgeschwindigkeit, für das Ausführungsbeispiel nach Fig. 1,
Fig. 3 ein Diagramm der Bewegungsgeschwindigkeit über der Zeit für ein Beispiel eines Verzögerungsvorganges,
Fig. 4 ein Beispiel für eine Zuordnung von Werten des Sollsignals für die Strangspannung(en) zu Werten der Bewegungsgeschwindigkeit und
Fig. 5 ein Beispiel für eine Zuordnung von Werten des Sollsignals für den Polradwinkel zu Werten der Bewegungsgeschwindigkeit.

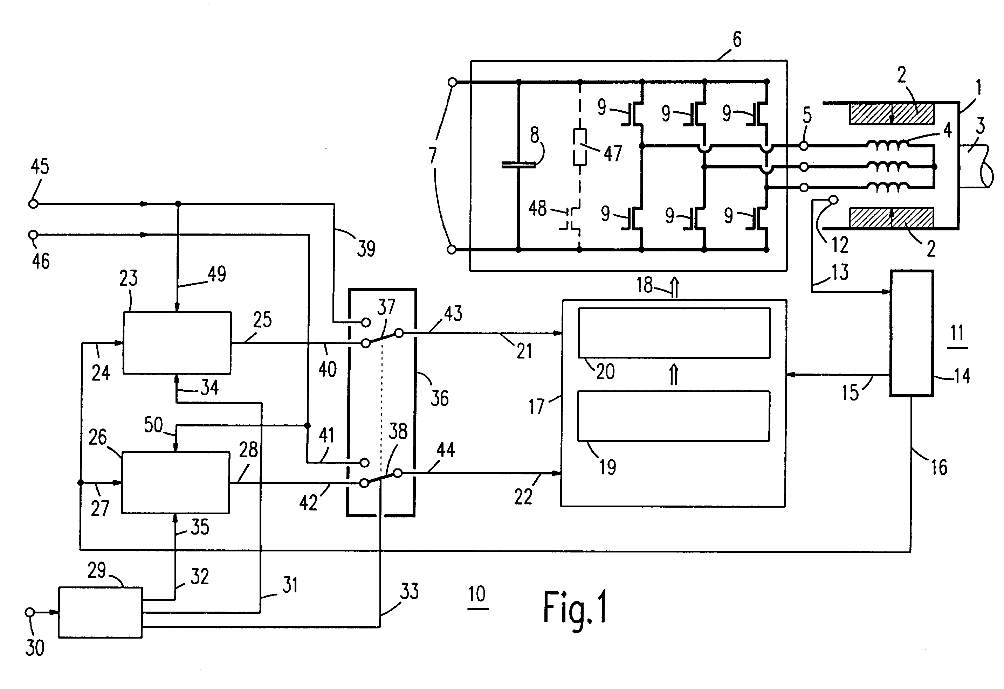

In Fig. 1 ist mit dem Bezugszeichen 1 ein Motor bezeichnet, dessen Rotor Permanentmagnete 2 zur Felderzeugung aufweist und ein Abtriebselement 3 darstellt und dessen Stator drei Wicklungsstränge 4 aufweist, die über Anschlüsse 5 aus einem Wechselrichter 6 mit elektrischer Energie gespeist werden, die dem Wechselrichter 6 wiederum über Stromversorgungsanschlüsse 7 aus einer nicht dargestellten Gleichspannungsquelle zugeführt wird. Der Wechselrichter 6 umfaßt einen Glättungskondensator 8 und für jeden der Wicklungsstränge 4 eine Reihenschaltung aus zwei Stromzuführelementen 9. Der Glättungskondensator 8 und alle Reihenschaltungen von Stromzuführelementen sind parallel zueinander mit den Stromversorgungsanschlüssen 7 verbunden und dienen in an sich bekannter Weise zum wahlweisen Verbinden der Wicklungsstränge 4 mit den Stromversorgungsanschlüssen 7 und dadurch der Speisung des Motors 1 mit Energie. Motor 1 und Wechselrichter 6 sind nur sehr grob schematisch angedeutet und können in ihrer näheren Ausgestaltung sehr vervielfältig variiert werden. Beispielsweise kann die Zahl der Wicklungsstränge variieren; die Felderzeugung kann durch Feldwicklungen anstelle der Permanentmagnete 2 vorgenommen werden, und außerdem kann anstelle eines rotierenden Abtriebselements 3 auch ein linear bewegliches Abtriebselement zum Einsatz kommen. Auch sind für den Wechselrichter 6 zahlreiche Ausgestaltungen und Abwandlungen möglich, die im Prinzip bekannt sind und auf die hier nicht näher eingegangen werden soll.

Die Anordnung nach Fig. 1 umfaßt weiterhin eine Steuerschaltung 10 zum Steuern der Stromzuführelemente 9 sowie eine im nachfolgenden als Bewegungssensor 11 bezeichnete Einrichtung zur Bestimmung der Lage und der Bewegungsgeschwindigkeit des Abtriebselements 3. Der Bewegungssensor 11 enthält einen gegebenenfalls auch mehrteilig ausgeführten Lagedetektor 12 zur Detektion der augenblicklichen Lage des Abtriebselements 3 des Motors 1. Der Lagedetektor 12 gibt ein Lagesignal über eine Lagesignalleitung 13 an eine Aufbereitungsschaltung 14 ab, die Teil des Bewegungssensors 11 ist. In der Aufbereitungsschaltung 14 wird das über die Lagesignalleitung 13 zugeführte Lagesignal zur Weiterverarbeitung innerhalb der Steuerschaltung 10 aufbereitet. Diese Aufbereitung dient zum einen dazu, ein zum Kommutieren des Motors 1 geeignetes Lagesignal zu erzeugen, und umfaßt andererseits die Ableitung eines die Bewegungsgeschwindigkeit des beweglichen Abtriebselements 3 darstellenden Bewegungssignals aus dem vom Lagedetektor 12 über die Lagesignalleitung 13 zugeführten Lagesignal.

Im vorliegenden Ausführungsbeispiel wird das aufbereitete Lagesignal an einem Lagesignalausgang 15, das Bewegungssignal an einem Bewegungssignalausgang 16 der Aufbereitungsschaltung 14 abgegeben. Durch diese Trennung zwischen Lagesignal und Bewegungssignal wird deren weitere Verarbeitung bzw. Auswertung vereinfacht. In einer anderen Ausgestaltung könnte beispielsweise das Lagesignal Informationen sowohl über die Lage als auch die Bewegungsgeschwindigkeit des Abtriebselements 3 enthalten. Wenn ein derartiges Lagesignal zur Auswertung gelangt, muß in der Regel die Lageinformation von der Geschwindigkeitsinformation getrennt werden.

Die Steuerschaltung 10 umfaßt eine Kommutierungsstufe 17, von der über eine Wirkverbindung 18 das Steuern der Stromzuführelemente 9 im Wechselrichter 6 ausgeführt wird. Die Kommutierungsstufe 17 ist dazu beispielsweise, wie in Fig. 1 grob schematisch angedeutet, mit einem Regler 19 und einem durch diesen Regler 19 gesteuerten Spannungskurvengenerator 20 ausgerüstet. Die Kommutierungsstufe 17 weist je einen Sollsignaleingang 21 bzw. 22 für die Sollsignale für die Amplitude(n) der Strangspannung(en) bzw. für den Polradwinkel auf. Nach Maßgabe von noch näher zu erläuternden Sollsignalen, die über diese Sollsignaleingänge 21, 22 zugeführt werden, sowie nach Maßgabe des Lagesignals vom Lagesignalausgang 15 der Aufbereitungsschaltung 14 steuert der Regler 19 den Spannungskurvengenerator 20, von dem wiederum über die Wirkverbindung 18 die Stromzuführelemente 9 leitend oder gesperrt geschaltet werden. Insgesamt ermöglicht die Kommutierungsstufe 17 einen Betrieb des Motors 1 mit vorgegebenen Amplituden der Strangspannungen - wobei diese Amplituden bevorzugt bei symmetrischem Aufbau des Motors 1 für alle Wicklungsstränge 4 übereinstimmen und somit auch im Singular von einer Amplitude der Strangspannung gesprochen werden kann - und vorgegebenem Polradwinkel. Der Aufbau der Kommutierungsstufe 17 ist jedoch nicht Gegenstand der vorliegenden Erfindung und soll daher nicht näher erläutert werden.

Die Steuerschaltung 10 enthält weiterhin eine Strangspannungsbestimmungsstufe 23, der an einem Bewegungssignaleingang 24 das Bewegungssignal vom Bewegungssignalausgang 16 der Aufbereitungsschaltung 14 zugeführt wird. An einem Sollsignalausgang 25 wird von der Strangspannungsbestimmungsstufe 23 das von der Bewegungsgeschwindigkeit abhängige Sollsignal der Amplituden der Strangspannungen für die Betriebsart des Verzögerns des Abtriebselements 3 abgegeben und kann dem ersten Sollsignaleingang 21 der Kommutierungsstufe zugeleitet werden.

Die Steuerschaltung 10 enthält ferner eine Polradwinkelbestimmungsstufe 26 mit einem Bewegungssignaleingang 27, über den das Bewegungssignal vom Bewegungssignalausgang 16 der Aufbereitungsschaltung 14 zuführbar ist, sowie mit einem Sollsignalausgang 28 für das von der Polradwinkelbestimmungsstufe 26 abzugebende, von der Bewegungsgeschwindigkeit des Abtriebselements abhängige Sollsignal für den Polradwinkel. Dieses Sollsignal kann vom Sollsignalausgang 28 dem zweiten Sollsignaleingang 22 der Kommutierungsstufe 17 zugeleitet werden.

In der Steuerschaltung 10 ist weiterhin eine Verzögerungs-Aktivierungsstufe 29 enthalten, der über einen Eingang 30 ein Betriebsarten-Steuersignal zuführbar und die durch dieses zwischen einer Betriebsart für den Motorbetrieb und einer Betriebsart für das Verzögern umsteuerbar ist. Die Verzögerungs-Aktivierungsstufe 29 weist zwei Aktivierungssignalausgänge 31, 32 sowie einen Umschaltsignalausgang 33 auf. Über die Aktivierungssignalausgänge 31, 32 wird beim Umsteuern der Verzögerungs-Aktivierungsstufe 29 in die Betriebsart für das Verzögern je ein Aktivierungssignal an entsprechende Aktivierungssignaleingänge 34 bzw. 35 der Strangspannungsbestimmungsstufe 23 bzw. der Polradwinkelbestimmungsstufe 26 geleitet. Die Aktivierungssignale setzen die Strangspannungsbestimmungsstufe 23 und die Polradwinkelbestimmungsstufe 26 für die Betriebsart des Verzögerns in Funktion, d.h. schalten diese Stufen aktiv. Der Umschaltsignalausgang 33 führt ein Umschaltsignal an eine ebenfalls von der Steuerschaltung 10 umfaßte Sollsignal-Umschaltstufe 36. Die Sollsignal-Umschaltstufe 36 enthält zwei Umschalter 37 bzw. 38, die je zwei Eingangsanschlüsse 39, 40 bzw. 41, 42 und je einen Ausgangsanschluß 43 bzw. 44 aufweisen. Dabei ist der zweite Eingangsanschluß 40 des ersten Umschalters 37 mit dem Sollsignalausgang 25 der Strangspannungsbestimmungsstufe 23 und der Ausgangsanschluß 43 des ersten Umschalters 37 mit dem ersten Sollsignaleingang 21 der Kommutierungsstufe 17 verbunden. Entsprechend ist der Sollsignalausgang 28 der Polradwinkelbestimmungsstufe 26 mit dem zweiten Eingangsanschluß 42 des zweiten Umschalters 38 und der Ausgangsanschluß 44 des zweiten Umschalters 38 mit dem zweiten Sollsignaleingang 22 der Kommutierungsstufe 17 verbunden. In der in Fig. 1 gezeichneten Stellung der Umschalter 37, 38 werden somit die Sollsignale von der Strangspannungsbestimmungsstufe 23 und der Polradwinkelbestimmungsstufe 26 an die Kommutierungsstufe 17 geleitet, d.h. die Umschalter 37, 38 befinden sich in der Stellung für die Betriebsart des Verzögerns.

Der erste Eingangsanschluß 39 des ersten Umschalters 37 ist mit einem ersten Anschluß 45, der erste Eingangsanschluß 41 des zweiten Umschalters 38 mit einem zweiten Anschluß 46 verbunden. Über die Anschlüsse 45, 46 können der Schaltungsanordnung im Motorbetrieb externe Sollsignale für die Strangspannung bzw. den Polradwinkel zugeführt werden, worüber eine externe Steuerung des Motors 1 im Motorbetrieb möglich ist. Natürlich können über die Anschlüsse 45, 46 auch Sollsignale mit konstanten Werten zugeführt werden, falls dies für den Motorbetrieb erwünscht ist.

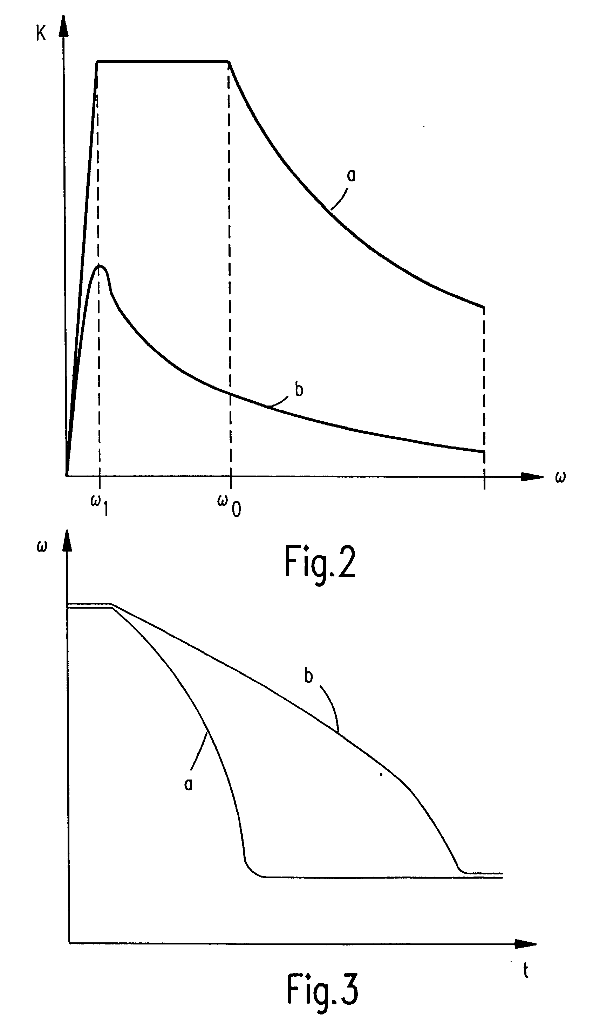

Fig. 2 zeigt ein Diagramm, in dem die Verzögerungskraft K über der elektrischen Kreisfrequenz $\omega$ des Motors 1 aufgetragen ist. Darin ist mit dem Buchstaben a die Verzögerungskraft K als Funktion der elektrischen Kreisfrequenz $\omega$ für einen erfindungsgemäßen Verzögerungsvorgang dargestellt. Es sei angemerkt, daß die elektrische Kreisfrequenz $\omega$ proportional der Bewegungsgeschwindigkeit, im gewählten Beispiel somit proportional zur Drehzahl des Abtriebselements 3 ist. Im Bereich hoher Bewegungsgeschwindigkeiten für Werte der elektrischen Kreisfrequenz $\omega$, die oberhalb der zweiten Grenzgeschwindigkeit $\omega_0$ liegen, folgt die Kurve a zumindest weitgehend einer Hyperbel, die durch die maximal zulässige elektrische Leistung im Motor 1 bestimmt ist. Im Bereich mittlerer Bewegungsgeschwindigkeiten zwischen der ersten Grenzgeschwindigkeit (entsprechend dem zugehörigen Wert $\omega_1$ der elektrischen Kreisfrequenz) und der zweiten Grenzgeschwindigkeit (entsprechend $\omega_0$) ist die Verzögerungskraft K konstant und entspricht dort ihrem maximal zulässigen Wert. Unterhalb der ersten Grenzgeschwindigkeit, d.h. zwischen dem Stillstand und dem Wert $\omega_1$, fällt die Verzögerungskraft zum Stillstand hin von ihrem maximal zulässigen Wert auf Null ab.

Im Vergleich dazu ist mit Kurve b in Fig. 2 die Funktion der Verzögerungskraft K über der Kreisfrequenz $\omega$ für den Fall aufgetragen, daß die Wicklungsstränge 4 des Motors 1 zur Verzögerung lediglich dauernd kurzgeschlossen werden. Es ist erkennbar, daß dadurch nur eine wesentlich geringere Verzögerungskraft K erreichbar ist, die nur ein vergleichsweise langsames Stillsetzen des Motors 1 ermöglicht.

Zur Verdeutlichung der für das Stillsetzen des Motors 1 benötigten Zeiten ist in Fig. 3 mit a ein Kreisfrequenz-Zeit-Diagramm für einen erfindungsgemäßen Verzögerungsvorgang aufgetragen, wohingegen mit b ein Verzögerungsvorgang dargestellt ist, der sich beim dauernden Kurzschließen der Wicklungsstränge 4 des Motors 1 ergibt. Dabei ist mit t die Zeit bezeichnet. Es ist erkennbar, daß bei der Erfindung die elekfrische Kreisfrequenz $\omega$, d.h. auch die Drehzahl des Abtriebselements 3 des Motors 1, vom Augenblick des Einleitens der Betriebsart des Verzögerns wesentlich rascher auf Null abfällt als in dem zum Vergleich dargestellten Fall b des Kurzschließens der Wicklungsstränge 4. Unmittelbar vor Erreichen des Stillstands wird durch den Rückgang der Verzögerungskraft K ein vergleichsweise allmählicher Übergang der Bewegung des Abtriebselementes 3 zum Stillstand, also ein ruckfreies Anhalten gewährleistet.

Für das mit den Kurven b in den Fig. 2 und 3 beschriebene Kurzschließen der Wicklungsstränge 4 des Motors 1 ist in Fig. 1 gestrichelt ein Bremswiderstand 47 mit elektronischem Bremsschalter 48 angedeutet, wie er im Wechselrichter 6 zur Rückgewinnung bzw. Dissipation der Bewegungsenergie des Abtriebselements 3 beim Verzögern einsetzbar wäre. Abgesehen davon, daß ein derartiger Bremswiderstand 47 und entsprechend auch ein Bremsschalter 48 aufgrund der durch diese Bauelemente zu bewältigenden elektrischen bzw. thermischen Leistungen einen hohen apparativen Aufwand bedingen würden, könnte dadurch im höchsten Fall eine Verzögerungskraft K über der Kreisfrequenz $\omega$ entsprechend der Kurve b in Fig. 2 erreicht werden. Der Verzögerungsvorgang würde sich somit gemäß Fig. 3 im schnellsten Fall gemäß der dortigen Kurve b, im allgemeinen jedoch über eine größere Zeitdauer erstrecken.

Gemäß der Erfindung sind somit wesentlich höhere Verzögerungskräfte und damit wesentlich kürzere Stillsetzzeiten erreichbar. Außerdem ermöglicht die Erfindung, die Verzögerungskraft K auch im Bereich unterhalb der Kurve a in Fig. 2 zu wählen, falls dies den an den Antrieb gestellten Forderungen genügt. Der Verzögerungsvorgang kann dann gezielt materialschonender ausgeführt werden.

Andererseits kann die Verzögerungskraft bei der Erfindung auch im Bereich niedriger Bewegunsgeschwindigkeit bis zum Stillstand hin einen möglichst hohen Wert beibehalten. Unter Verzicht auf ein möglicht ruckfreies Stillsetzen könnte dann eine noch kürze Stillsetzzeit angestrebt werden. Dem in Fig. 2 mit der Kurve a dargestellten Verlauf der Verzögerungskraft K über der Kreisfrequenz $\omega$ liegen die im vorstehenden erläuterten Beziehungen für die Sollsignale der Strangspannung U und des Polradwinkels $\delta$ für die drei unterschiedenen Bereiche niedriger, mittlerer und hoher Bewegungsgeschwindigkeit zugrunde.

Zum Erreichen eines möglichst ruckfreien Übergangs zwischen dem Motorbetrieb und dem Verzögern, wie er bereits für das Erreichen des Stillstands beschrieben ist, ist die Schaltungsanordnung 10 derart ausgebildet, daß beim Auslösen der Betriebsart des Verzögerns durch die vom Betriebsartensteuersignal am Eingang 30 angesteuerte Verzögerungs-Aktivierungsstufe 29 nicht abrupt von den Sollsignalen der Strangspannung und des Polradwinkels an den Anschlüssen 45, 46 auf die Sollsignale umgeschaltet wird, die - von der Strangspannungsbestimmungsstufe 23 und der Polradwinkelbestimmungsstufe 26 geliefert - für den aktuellen Wert der Bewegungsgeschwindigkeit in der Betriebsart des Verzögerns vorgesehen sind. Zwar wird über den Umschaltsignalausgang 33 die Sollsignal-Umschaltstufe 36 derart betätigt, daß vom Zeitpunkt des Einleitens der Betriebsart des Verzögerns an alle weiteren Sollsignale von der Strangspannungsbestimmungsstufe 23 bzw. der Polradwinkelbestimmungsstufe 26 an die Sollsignaleingänge 21 bzw. 22 geliefert werden. Über Vergleichseingänge 49 bzw. 50 der Strangspannungsbestimmungsstufe 23 bzw. der Polradwinkelbestimmungsstufe 26 werden diesen Stufen die Sollsignale für die Amplitude der Strangspannung U vom ersten Anschluß 45 bzw. für den Polradwinkel vom zweiten Anschluß 46 zugeleitet. Beim Auslösen der Betriebsart des Verzögerns wird dann in der Strangspannungsbestimmungsstufe 23 und in der Polradwinkelbestimmungsstufe 26 der erste, bewegungsgeschwindigkeitsabhängig ermittelte Wert des Sollsignals für die Betriebsart des Verzögerns mit dem letzten, aktuellen Wert des entsprechenden Sollsignals für den bis dahin durchgeführten Motorbetrieb verglichen. In einem oder mehreren zeitlichen Schritten kann nun der Wert des am Sollsignalausgang 25 bzw. 28 abzugebenden Sollsignals allmählich oder auch kontinuierlich vom Motorbetrieb auf die Betriebsart des Verzögerns umgesteuert werden. Dieses kontinuierliche oder schrittweise Umsteuern erfolgt je nach Auslegung der Strangspannungsbestimmungsstufe 23 und der Polradwinkelbestimmungsstufe 26 als analoge oder digitale Schaltung.

In einer vereinfachten Ausführung der Erfindung, in der auf ruckfreie Übergänge vom Motorbetrieb in die Betriebsart des Verzögerns und aus dieser in den Stillstand kein Wert gelegt wird, könnten die Aktivierungssignaleingänge 34, 35 und die Vergleichseingänge 49, 50 bei der Strangspannungsbestimmungsstufe 23 bzw. der Polradwinkelbestimmungsstufe 26 entfallen und könnte entsprechend die Verzögerungs-Aktivierungsstufe 29 stark vereinfacht werden oder ganz entfallen. Vom Eingang 30 her könnte dann das Betriebsarten-Steuersignal unmittelbar die Sollsignal-Umschaltstufe 36 betätigen.

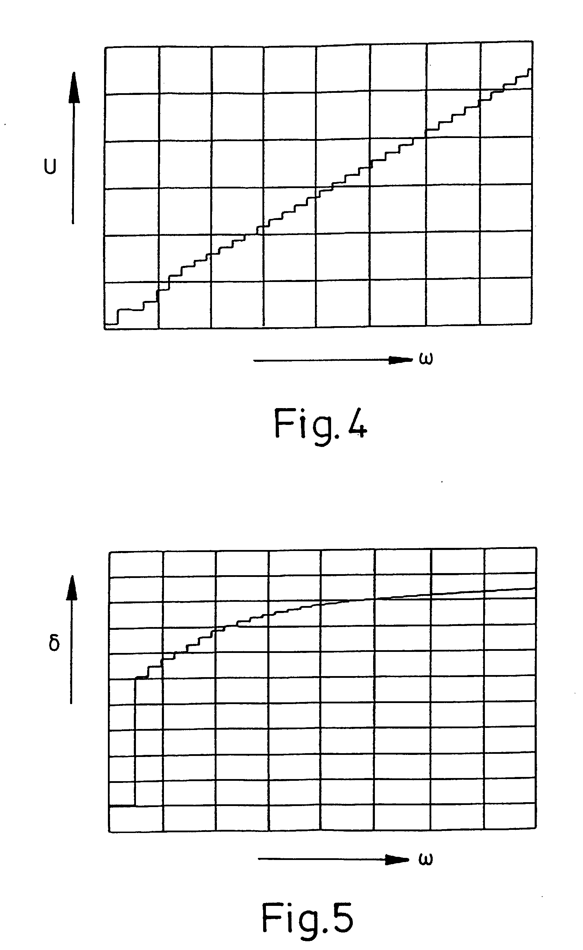

Für den Fall, daß die Strangspannungsbestimmungsstufe 23 bzw. die Polradwinkelbestimmungsstufe 26 eine erste bzw. zweite Speichervorrichtung umfassen, aus denen zu jedem aus den zuführbaren Werten des Bewegungssignals bestimmbaren Wert der Bewegungsgeschwindigkeit je ein Wert des Sollsignals für die Strangspannung U bzw. den Polradwinkel δ abrufbar ist, enthalten die Fig. 4 bzw. 5 eine anschauliche Darstellung für ein Beispiel der in diesen Speichervorrichtungen abgespeicherten Werte der Sollsignale U bzw. δ in Abhängigkeit von der Kreisfrequenz ω des Motors 1. Es ist erkennbar, daß je einem Intervall der Werte der Bewegungsgeschwindigkeit bzw. entsprechend der Kreisfrequenz ω ein bestimmter Wert des Sollsignals U bzw. δ zugeordnet ist. Je nach Anforderungen an den zu realisierenden Antrieb können die Stufen in den Kurven der Fig. 4 und 5, d.h. die Intervalle der Werte der Bewegungsgeschwindigkeit bzw. der Kreisfrequenz ω, größer oder kleiner ausgeführt werden. Dabei kann - insbesondere bei größeren Intervallen der Bewegungsgeschwindigkeit - in der Strangspannungsbestimmungsstufe 23 bzw. der Polradwinkelbestimmungsstufe 26 je eine Interpolationseinrichtung angeordnet sein, die aus der Lage des aktuellen Wertes der Bewegungsgeschwindigkeit innerhalb eines der Intervalle nach Fig. 4 bzw. 5 den über die Sollsignalausgänge 25 bzw. 28 abzugebenden Wert des Sollsignals aus den abgespeicherten Werten des Sollsignals des zugehörigen Intervalls und des benachbarten Intervalls bzw. der benachbarten Intervalle durch Interpolation ermittelt.

Für die Verwirklichung eines ruckfreien Übergangs vom Motorbetrieb in die Betriebsart des Verzögerns kann dabei vorgesehen sein, daß innerhalb eines vorgegebenen Zeitraumes der Wert des Sollsignals nur über eine vorgegebene Höchstzahl von Stufen der abgespeicherten Werte der Sollsignale hinweg verändert werden darf. Selbstverständlich muß die Wahl dieser Stufen bzw. Zeitintervalle derart vorgenommen werden, daß dadurch das Erreichen der erfindungsgemäßen, hohen Verzögerungskräfte nicht verhindert wird.

Ein besonders kostengünstiger und kompakter Aufbau der erfindungsgemäßen Schaltungsanordnung läßt sich dadurch erreichen, daß die Strangspannungsbestimmungsstufe 23, die Polradwinkelbestimmungsstufe 26, die Verzögerungs-Aktivierungsstufe 29, die Sollsignal-Umschaltstufe 36 und bevorzugt auch die Kommutierungsstufe 17 sowie die Aufbereitungsschaltung 14 in einem mikroprozessorgesteuerten Schaltkreis zusammengefaßt werden. Der zusätzliche Aufwand an Bauteilen für die gemäß der Erfindung ausgestaltete Steuerschaltung 10 wird dann besonders niedrig.

**Patentansprüche**

1. Schaltungsanordnung zum Steuern eines elektronisch kommutierten Motors (1) mit einem beweglichen Abtriebselement (3) und wenigstens einem Wicklungsstrang, der aus einer Gleichspannungsquelle mit einer vorgebbaren Strangspannung und einem vorgebbaren Polradwinkel speisbar ist, mit einer Einrichtung (11) zur Bestimmung der Lage und/oder Bewegungsgeschwindigkeit des beweglichen Abtriebselements (im folgenden: Bewegungssensor), mit Stromzufuhrelementen (9) zum gesteuerten Verbinden der Wicklungsstränge mit der Gleichspannungsquelle und mit einer Steuerschaltung zum Steuern der Stromzuführelemente derart, daß sich die vorgegebene(n) Strangspannung(en) und Polradwinkel einstellen, wobei die Stromzuführelemente zum Verzögern des Abtriebselements derart von der Steuerschaltung steuerbar sind, daß eine der Bewegungsrichtung des Abtriebselements entgegengesetzte Kraft auf dieses aufgebracht wird,
<u>dadurch gekennzeichnet</u>, daß zum Verzögern des Abtriebselements Strangspannung(en) und/oder Polradwinkel in Abhangigkeit von der Bewegungsgeschwindigkeit derart steuerbar sind, daß

- in einem Bereich hoher Bewegungsgeschwindigkeit des Abtriebselements, der zu niedrigen Bewegungsgeschwindigkeiten hin durch das Erreichen einer höchstzulässigen Verzögerungskraft begrenzt ist, im Motor eine wenigstens weitgehend geschwindigkeitsunabhängige elektrische Leistung gemäß einem höchstzulässigen Strangstrom auftritt,
- in einem sich zu niedrigen Bewegungsgeschwindigkeiten hin an den Bereich hoher Bewegungsgeschwindigkeit anschließenden Bereich mittlerer Bewegungsgeschwindigkeit, der bis zu einer Bewegungsgeschwindigkeit reicht, bei der eine durch unmittelbares Kurzschließen der Wicklungsstränge erzeugbare Verzögerungskraft im wesentlichen ein Maximum erreichen würde, im Motor die höchstzulässige Verzögerungskraft auftritt, und
- in einem Bereich niedriger Bewegungsgeschwindigkeit, der sich zwischen dem Stillstand und dem Bereich mittlerer Bewegungsgeschwindigkeit erstreckt, die Verzögerungskraft zum Stillstand hin von ihrem höchstzulässigen Wert auf Null absinkt,

oder daß die Verzögerungskraft in den Bereichen hoher und mittlerer Bewegungsgeschwindigkeit auf Werte im Bereich zwischen den durch die vorstehenden Bedingungen bestimmten Werten und Null und im Bereich niedriger Bewegungsgeschwindigkeit auf Werte zwischen der höchstzulässigen Verzögerungskraft und Null einstellbar ist.

2. Schaltungsanordnung nach Anspruch 1, dadurch gekennzeichnet, daß die Steuerschaltung umfaßt:

- eine Kommutierungsstufe (17), von der das Steuern der Stromzuführelemente nach Maßgabe vorgegebener Sollsignale für die Amplitude(n) (43) der Strangspannung(en) und für den Polradwinkel (44) sowie eines zumindest die augenblickliche Lage (15) des Abtriebselements darstellenden Lagesignals ausgeführt wird,
- eine Strangspannungsbestimmungsstufe (23), der das Lagesignal und/oder für den Fall, daß das Lagesignal dies nicht enthält, ein die Bewegungsgeschwindigkeit des Abtriebselements darstellendes Bewegungssignal zuführbar ist und von der daraus das von der Bewegungsgeschwindigkeit abhängige Sollsignal der Amplitude(n) der Strangspannung(en) für das Verzögern des Abtriebselements bestimmbar und abgebbar ist,
- eine Polradwinkelbestimmungsstufe (26), der das Lagesignal und/oder für den Fall, daß das Lagesignal dies nicht enthält, das Bewegungssignal zuführbar ist und von der daraus das von der Bewegungsgeschwindigkeit abhängige Sollsignal des Polradwinkels für das Verzögern des Abtriebselements bestimmbar und abgebbar ist,
- eine Verzögerungsaktivierungsstufe (29), die durch ein Betriebsarten-Steuersignal zwischen einer Betriebsart für Motorbetrieb und einer für das Verzögern umsteuerbar ist und durch die für das Verzögern die Strangspannungsbestimmungsstufe und die Polradwinkelbestimmungsstufe aktiv schaltbar sind, und
- eine Sollsignal-Umschaltstufe (36), die von der Verzögerungs-Aktivierungsstufe umsteuerbar ist und durch die in der Betriebsart des Verzögerns die Sollsignale der Amplitude(n) der Strangspannung(en) bzw. des Polradwinkels von der Strangspannungsbestimmungsstufe bzw. der Polradwinkelbestimmungsstufe oder wahlweise in der Betriebsart des Motorbetriebs entsprechende, vorgegebene Sollsignale der Kommutierungsstufe zuführbar sind.

3. Schaltungsanordnung nach Anspruch 2, dadurch gekennzeichnet, daß das Sollsignal für die Strangspannung(en) U in der Strangspannungsbestimmungsstufe für den Bereich hoher Bewegungsgeschwindigkeiten gemäß der Beziehung

$$U = \omega \cdot L \cdot Imax - \sqrt{\omega^2 \cdot \psi^2 - (R \cdot Imax)^2},$$

für den Bereich mittlerer Bewegungsgeschwindigkeiten gemäß der Beziehung

$$U = \omega \cdot L \cdot Imax \cdot \sqrt{\omega/\omega_0} - \sqrt{\omega^2 \cdot \psi^2 - (R \cdot Imax)^2 \cdot \omega/\omega_0}$$

und für den Bereich niedriger Bewegungsgeschwindigkeit gemäß der Beziehung

$$U = \omega^2 \cdot L \cdot \psi / R$$

bestimmt wird, wobei

$\omega$ die elektrische Kreisfrequenz des Motors,
L die Stranginduktivität,
Imax der höchstzulässige Strangstrom,
$\psi$ die Flußverkettung eines Motorstrangs mit einem Erregerfeld des Motors,
R der ohmsche Strangwiderstand und
$\omega_0$ die elektrische Kreisfrequenz $\omega$ des Motors an der Grenze zwischen den Bereichen mittlerer und hoher Bewegungsgeschwindigkeiten ist.

4. Schaltungsanordnung nach Anspruch 2,

dadurch gekennzeichnet, daß die Strangspannungsbestimmungsstufe (23) eine erste Speichervorrichtung umfaßt, aus der zu jedem aus den zuführbaren Werten des Lage- und/oder des Bewegungssignals bestimmbaren Wert der Bewegungsgeschwindigkeit je ein Wert des Sollsignals für die Strangspannung(en) abrufbar ist.

5. Schaltungsanordnung nach Anspruch 4, dadurch gekennzeichnet, daß der gesamte Bereich der aus den zuführbaren Werten des Lage- und/ oder des Bewegungssignals bestimmbaren Werte der Bewegungsgeschwindigkeit in Intervalle unterteilt ist, daß aus der ersten Speichervorrichtung zu jedem Intervall ein allen Bewegungsgeschwindigkeitswerten eines Intervalls gemeinsamer Wert des Sollsignals für die Strangspannung(en) abrufbar ist und daß die Strangspannungsbestimmungsstufe weiterhin eine erste Interpolationsanordnung umfaßt zum Erzeugen interpolierter Werte des Sollsignals der Amplitude(n) der Strangspannung(en).

6. Schaltungsanordnung nach Anspruch 2, dadurch gekennzeichnet, daß das Sollsignal für den Polradwinkel δ in der Polradwinkelbestimnungsstufe (26) für den Bereich hoher Bewegungsgeschwindigkeiten gemäß der Beziehung

$$\delta = 180° - \arcsin \frac{R \cdot Imax}{\omega \cdot \psi},$$

für den Bereich mittlerer Bewegungsgeschwindigkeiten gemäß der Beziehung

$$\delta = 180° - \arcsin \frac{R \cdot Imax}{\sqrt{\omega \cdot \omega_0} \cdot \psi}$$

und für den Bereich niedriger Bewegungsgeschwindigkeit gemäß der Beziehung

$$\delta = 90°$$

bestimmt wird.

7. Schaltungsanordnung nach Anspruch 2, 3 oder 6, dadurch gekennzeichnet, daß in der Strangspannungs-und/oder der Polradwinkelbestimmungsstufe anhand vorgegebener Grenzwerte für das Lage-und/oder Bewegungssignal aus diesem bestimmt wird, in welchem der Bereiche sich der aktuelle Wert der Bewegungsgeschwindigkeit befindet.

8. Schaltungsanordnung nach Anspruch 2, dadurch gekennzeichnet, daß die Polradwinkelbestimmungsstufe (26) eine zweite Speichervorrichtung umfaßt, aus der zu jedem aus den zuführbaren Werten des Lage- und/oder des Bewegungssignals bestimmbaren Wert der Bewegungsgeschwindigkeit je ein Wert des Sollsignals für den Polradwinkel abrufbar ist.

9. Schaltungsanordnung nach Anspruch 8, dadurch gekennzeichnet, daß der gesamte Bereich der aus den zuführbaren Werten des Lage- und/ oder des Bewegungssignals bestimmbaren Werte der Bewegungsgeschwindigkeit in Intervalle unterteilt ist, daß aus der zweiten Speichervorrichtung zu jedem Intervall ein allen Bewegungsgeschwindigkeitswerten eines Intervalles gemeinsamer Wert des Sollsignals für den Polradwinkel abrufbar ist und daß die Polradwinkelbestimmungsstufe weiterhin eine zweite Interpolationsanordnung umfaßt zum Erzeugen interpolierter Werte des Sollsignals für den Polradwinkel.

10. Schaltungsanordnung nach einem der vorhergehenden Ansprüche, dadurch gekennzeichnet, daß beim Übergang in die Betriebsart des Verzögerns des Abtriebselements die Werte der Sollsignale der Amplitude(n) der Strangspannung(en) und/oder des Polradwinkels ausgehend von ihren aktuellen Werten für die vor dem Übergang vorhandene Betriebsart mit nicht mehr als einer höchstzulässigen Änderungsgeschwindigkeit in die für die Betriebsart des Verzögerns vorzugebenden Werte überführt werden, wobei die höchstzulässige Änderungsgeschwindigkeit derart bemessen ist, daß durch die Änderung der Werte der Sollsignale auftretende Transiente des Strangstromes auf den höchstzulässigen Strangstrom begrenzt werden.

## Claims

1. A circuit arrangement for controlling an electronically commutated motor (1) with a movable drive member (3) and at least one phase coil, which is energizable from a direct voltage source with a given phase voltage and a given load angle, which arrangement comprises a device (11) (hereinafter referred to as: motion sensor) for determining the position and/or speed of movement of the movable drive member, current supply elements (9) for the controlled connection of the phase coils to the direct voltage source, and a control circuit for controlling the current supply elements so as to obtain the given phase voltage(s) and load angles, the current supply elements being controllable by the control circuit to decelerate the drive member, in such a manner that the drive member is subjected to a force opposite to the direction of movement of the drive member, characterized in that to decelerate the drive member the phase voltage(s) and/or load angles are controllable in dependence upon the speed of movement in such a manner that

- an at least substantially speed-independent electric power in accordance with a maximum permissible phase current occurs in the motor in a range of high speeds of movement of the drive member, which range is bounded towards lower speeds owing to a maximum permissible deceleration force being reached,
- the maximum permissible deceleration force occurs in the motor in a range of intermediate speeds, which adjoins the range of high speeds towards the low-speed end thereof and which extends down to a speed of movement at which a deceleration force that could be generated by direct short-circuiting of the phase coils would substantially reach a maximum, and
- the deceleration force decreases towards standstill from its maximum permissible value to zero in a range of low speeds of movement which extends between standstill and the range of intermediate speeds,

or that the deceleration force in the ranges of high and intermediate speeds can be set to values in the range between the values dictated by the above conditions and zero, and in the range of low speeds to values between the maximum permissible deceleration force and zero.

2. A circuit arrangement as claimed in Claim 1, <u>characterized in that</u> the control circuit comprises:

- a commutation stage (17) which controls the current supply elements in accordance with given nominal-value signals for the amplitude(s) (43) of the phase voltage(s) and for the load angle (44) as well as a position signal representative of at least the instantaneous position (15) of the drive member,
- a phase voltage determining stage (23) which is arranged to receive the position signal and/or, if not included in the position signal, a motion signal representative of the speed of movement of the drive member, and which is adapted to derive therefrom and to supply the speed-dependent nominal-value signal of the amplitude(s) of the phase voltage(s) for the deceleration of the drive member,
- a load-angle determining stage (26) which is arranged to receive the position signal and/or the motion signal, if not included in the position signal, and which is adapted to derive therefrom and to supply the speed-dependent nominal-value signal of the load angle for the deceleration of the drive member,

- a deceleration activating stage (29) which is switchable by a mode control signal between a motoring mode and a deceleration mode and by means of which the phase voltage determining stage and the load-angle determining stage can be activated for the purpose of deceleration, and
- a nominal-value signal switching stage (36) which is controllable by the deceleration activating stage and which is adapted to apply to the commutation stage given nominal-value signals corresponding to the nominal-value signals for the amplitude(s) of the phase voltage (s) and for the load angle from the phase voltage determining stage and the load-angle determining stage, respectively, in the deceleration mode or, if desired, in the motoring mode.

3. A circuit arrangement as claimed in Claim 2, <u>characterized in that</u> the phase voltage determining stage determines the nominal-value signal for the phase voltage(s) U in accordance with the relationship

$$U = \omega \cdot L \cdot Imax - \sqrt{\omega^2 \cdot \psi^2 - (R \cdot Imax)^2},$$

for the range of high speeds, in accordance with the relationship

$$U = \omega \cdot L \cdot Imax \cdot \sqrt{\omega/\omega_0} - \sqrt{\omega^2 \cdot \psi^2 - (R \cdot Imax)^2 \cdot \omega/\omega_0}$$

for the range of intermediate speeds, and in accordance with the relationship

$$U = \omega^2 \cdot L \cdot \psi / R$$

for the range of low speeds, where

$\omega$ is the electrical angular frequency of the motor,
L is the phase-coil inductance,
Imax is the maximum permissible phase current,
$\psi$ is the flux linkage between a phase coil and an excitation field of the motor,
R is the ohmic phase-coil resistance, and
$\omega_0$ is the electrical angular frequency $\omega$ of the motor at the boundary between the ranges of intermediate and high speeds of movement.

4. A circuit arrangement as claimed in Claim 2, <u>characterized in that</u> the phase voltage determining stage (23) comprises a first storage device from which a value of the nominal-value signal for the phase voltage(s) can be read for each speed value derivable from the values of the position and/or motion signal which can be applied.

5. A circuit arrangement as claimed in Claim 4, characterized in that the entire range of speed values derivable from the values of the position and/or motion signal is divided into intervals, a value of the nominal-value signal for the phase voltage(s), which value is common to all speed values of an interval, can be read from the first storage device for each interval, and the phase voltage determining stage further comprises a first interpolation device for generating interpolated values of the nominal-value signal of the amplitude(s) of the phase voltage (s).

6. A circuit arrangement as claimed in Claim 2, characterized in that the load-angle determining stage (26) determines the nominal-value signal for the load angle $\delta$ in accordance with the relationship

$$\delta = 180° - \arcsin \frac{R \cdot Imax}{\omega \cdot \psi}$$

for the range of high speeds, in accordance with the relationship

$$\delta = 180° - \arcsin \frac{R \cdot Imax}{\sqrt{\omega \cdot \omega_0 \cdot \psi}}$$

for the range of intermediate speeds, and in accordance with the relationship

$$\delta = 90°$$

for the range of low speeds.

7. A circuit arrangement as claimed in Claim 2, 3 or 6, characterized in that on the basis of given limit values for the position and/or motion signal the phase voltage determining stage and/or load-angle determining stage determine from these signals in which of the ranges the actual value of the speed is situated.

8. A circuit arrangement as claimed in Claim 2, characterized in that the load-angle determining stage (26) comprises a second storage device from which a value of the nominal-value signal for the load angle can be read for each speed value derivable from the values of the position and/or motion signal whic can be applied.

9. A circuit arrangement as claimed in Claim 8, characterized in that the entire range of speed values derivable from the values of the position and/or motion signal is divided into intervals, a value of the nominal-value signal for the load angle, which value is common to all speed values of an interval, can be read from the first storage device for each interval, and the load-angle determining stage further comprises a second interpolation device for generating interpolated values of the nominal-value signal for the load angle.

10. A circuit arrangement as claimed in any one of the preceding Claims, characterized in that during the change-over to the deceleration mode of the drive member the values of the nominal-value signals for the amplitude(s) of the phase voltage(s) and/or the load angle are changed, starting from their actual values in the mode prior to the change-over, into the given values for the deceleration mode at a rate not higher than a maximum permissible rate of change, the maximum permissible rate of change being dimensioned in such a manner that the phase current transients resulting from the change of the values of the nominal-value signals are limited to the maximum permissible phase current.

**Revendications**

1. Circuit de commande d'un moteur (1) commuté électroniquement en fonction de la vitesse de mouvement avec un élément entraîné mobile (3) et au moins une phase d'enroulement qui peut être alimentée à partir d'une source de tension continue en une tension de phase préalablement déterminée et un angle de déphasage interne préalablement déterminé, avec un dispositif (11) en vue de la détermination de la position et/ou de la vitesse cinétique de l'élément entraîné mobile (ci-dessous : capteur de mouvement), avec des éléments d'alimentation de courant (9) en vue de la liaison commandée des phases d'enroulement avec la source de tension continue et avec un circuit de commande pour la commande des éléments d'alimentation de courant de telle sorte que la ou les tensions de phase préalablement déterminées et l'angle de déphasage interne soient réglés, les éléments d'alimentation de courant pouvant être commandés en vue du retardement de l'élément entraîné par le circuit de commande de telle sorte qu'une force opposée à la direction du mouvement de l'élément entraîné soit appliquée sur celle-ci, caractérisé en ce qu'en vue du retardement de l'élément entraîné, la ou les tensions de phase et/ou l'angle de déphasage interne (4) puissent être commandés de telle sorte que :

- dans une zone de vitesses de mouvement élevées de l'élément entraîné qui est limitée à des vitesses de mouvement inférieures en atteignant une force de retardement maximale autorisée, il se produit dans le moteur une puissance électrique indépendante, du moins en grande partie, de la vitesse conformément à un courant de phase maximal autorisé,

- dans une zone de vitesses de mouvement moyennes faisant suite à la zone de vitesses de mouvement élevées vers les vitesses de mouvement inférieures, laquelle s'étend jusqu'à une vitesse de mouvement à laquelle une force de retardement susceptible d'être produite par le court-circuit direct des phases d'enroulement atteint essentiellement un maximum, il se produit dans le moteur la force de retardement maximale autorisée et

- dans une zone de vitesses de mouvement inférieures qui s'étend entre l'arrêt et la zone de vitesses de mouvement moyennes, la force de retardement diminue de sa valeur maximale autorisée vers l'arrêt jusqu'à zéro ou la force de retardement dans les zones de vitesses de mouvement moyennes et élevées peut être réglée dans la zone entre les valeurs déterminées par les conditions précitées et zéro et dans la zone de la vitesses de mouvement inférieures à des valeurs entre la force de retardement maximale autorisée et zéro.

ou que la force de retardement dans les zones de vitesses de mouvement élevées et moyennes puissent être réglées à des valeurs comprises entre les valeurs déterminées par les conditions précitées et zéro et, dans la zone des vitesses de mouvement inférieures, à des valeurs comprises entre la force de retardement maximale autorisée et 0.

2. Circuit selon la revendication 1, caractérisé en ce que le circuit de commande comprend les éléments suivants:

- un étage de commutation (17) à partir duquel la commande des éléments d'alimentation en courant est effectuée en fonction de signaux de consigne préalablement déterminés pour la ou les amplitudes (45) de la ou des tensions de phase et pour l'angle de déphasage interne (44) ainsi que d'un signal de position représentant pour le moins la position instantanée (15) de l'élément entraîné,

- un étage de détermination de la tension du phase (23) auquel le signal de position et/ou, au cas où le signal de position ne le contient pas, un signal de mouvement représentant la vitesse cinétique de l'élément entraîné peut être amené et d'où le signal de consigne dépendant de la vitesse cinétique de la ou des amplitudes de la ou des tensions de phase peut être déterminé et délivré pour le retardement de l'élément entraîné,

- un étage de détermination de l'angle de déphasage interne (26) auquel le signal de position et/ou, dans le cas où le signal de position ne le contient pas, un signal de mouvement, peut être amené et d'où le signal de consigne de l'angle de déphasage interne dépendant de la vitesse de mouvement peut être déterminé et délivré pour le retardement de l'élément entraîné ;

- un étage d'activation de retardement (29) qui peut être commuté par un signal de commande de mode de fonctionnement entre un mode de fonctionnement pour le fonctionnement du moteur et un autre pour le retardement et par lequel, pour le retardement, l'étage de détermination de la tension de phase et l'étage de détermination de l'angle de déphasage interne peuvent être activés et

- un étage de commutation du signal de consigne (36) qui peut être commandé par l'étage d'activation du retardement et par lequel, en mode de fonctionnement du retardement, les signaux de consigne de la ou des amplitudes, de la ou des tensions de phase ou de l'angle de déphasage interne peuvent être amenés par l'étage de détermination de la tension phase ou l'étage de détermination de l'angle de déphasage interne ou, au choix, les signaux prédéterminés correspondant au mode de fonctionnement du fonctionnement du moteur de l'étage de commutation.

3. Circuit selon la revendication 2, caractérisé en ce que le signal de consigne pour la ou les tensions de phase U est déterminé dans l'étage de détermination de la tension de phase pour la plage des vitesses de mouvement élevées conformément à l'équation

$$U = \omega.L.Imax - \sqrt{\omega^2\psi^2 - (R.Imax)^2}$$

pour la zone des vitesses de mouvement moyennes conformément à l'équation

$$U = \omega.L.Imax\sqrt{\omega/\omega_0} - \sqrt{\omega^2.\psi^2 - (R.Imax)^2 \cdot \omega/\omega_0}$$

et pour la zone des vitesses de mouvement inférieures conformément à l'équation

$$U = \omega^2.L.\psi/R$$

dans lesquelles

$\omega$ désigne la fréquence angulaire électrique du moteur,

L l'inductance de phase

Imax le courant de phase maximal autorisé

ψ l'enchaînement du flux d'une phase de moteur avec un champ d'excitation du moteur

R la résistance ohmique de phase et

$\omega_0$ la fréquence angulaire électrique ω du moteur à la frontière entre les zones des vitesses de mouvement moyennes et supérieures.

4. Circuit selon la revendication 2, caractérisé en ce que l'étage de détermination de la tension de phase (23) comprend un premier dispositif de mémoire à partir duquel une valeur du signal de consigne peut être appelée pour la ou les tensions de phase à partir de la valeur de la vitesse de mouvement à déterminer en fonction des valeurs du signal de position et/ou de mouvement à amener.

5. Circuit selon la revendication 4, caractérisé en ce que la plage globale des valeurs de la vitesse de mouvement à déterminer à partir des valeurs du signal de position et/ou du signal de mouvement qui peut lui être amené est subdivisée en intervalles de telle sorte qu'une valeur du signal de consigne pour la ou les tensions de phase communes à toutes les valeurs de la vitesse de mouvement d'un intervalle puissent être appelées à partir du premier dispositif de mémoire à chaque intervalle et que l'étage de détermination de la tension de phase comporte par ailleurs un premier dispositif d'interpolation en vue de la production de valeurs interpolées du signal de consigne et de la ou des amplitudes de la ou des tensions de phase.

6. Circuit selon la revendication 2, caractérisé en ce que le signal de consigne pour l'angle de déphasage interne δ dans l'étage de détermination de l'angle de déphasage interne (26) est déterminé pour la plage des vitesses de mouvement élevées conformément à l'équation

$$\delta = 180° - \arcsin \frac{R.Imax}{\omega.\psi},$$

pour la zone des vitesses de mouvement moyennes conformément à l'équation

$$\delta = 180° - \arcsin \frac{R.Imax}{\sqrt{\omega.\omega_0}\psi}$$

et pour la zone des vitesses de mouvement inférieures conformément à l'équation

$$\delta = 90°.$$

7. Circuit selon l'une des revendications 2, 3 ou 6, caractérisé en ce que les valeurs-limites pour le signal de position et/ou de mouvement préalablement déterminées dans l'étage de détermination de la tension de phase et/ou de l'angle de déphasage interne permettent de déterminer dans laquelle des zones se trouve la valeur actuelle de la vitesse de mouvement.

8. Circuit selon la revendication 2, caractérisé en ce que l'étage de détermination de l'angle de déphasage interne (26) comprend un deuxième dispositif de mémoire à partir duquel une valeur du signal de consigne pour l'angle de déphasage interne peut être appelée à partir de la valeur de la vitesse de mouvement à déterminer en fonction des valeurs du signal de position et/ou du signal de mouvement à amener.

9. Circuit selon la revendication 8, caractérisé en ce que toute la zone des valeurs de la vitesse de mouvement à déterminer à partir des valeurs du signal de position et/ou de mouvement à amener est subdivisée en intervalles de telle sorte qu'à partir du deuxième dispositif de mémoire une valeur du signal de consigne pour l'angle de déphasage interne commune à toutes les valeurs de la vitesse de mouvement d'un intervalle puisse être consultée à partir du deuxième dispositif de mémoire à chaque intervalle et que l'étage de détermination de l'angle de déphasage interne comporte par ailleurs un deuxième dispositif d'interpolation en vue de la production de valeurs interpolées du signal de consigne pour l'angle de déphasage interne.

10. Circuit selon l'une des revendications précédentes, caractérisé en ce que, lors du passage au mode de fonctionnement de retardement de l'élément entraîné, les valeurs des signaux de consigne de la ou des amplitudes de la ou des tensions de phase et/ou de l'angle de déphasage interne passent de leurs valeurs actuelles pour le type de fonctionnement présent avant la transition à une vitesse de modification ne dépassant pas la vitesse maximale autorisée aux valeurs à déterminer pour le type de fonctionnement du retardement, la vitesse de modification maximale autorisée étant dimensionnée de telle sorte que les transitoires du courant de phase survenant par la modification des valeurs des signaux de consigne soient limités au courant de phase maximal autorisé.

Fig.1

EP 0 714 162 B1

Fig.2

Fig.3

Fig.4

Fig.5